# FASCICULE DE BREVET EUROPEEN

(11) **EP 3 113 905 B1**
(45) Date de publication et mention de la délivrance du brevet: **24.04.2019**
(21) Numéro de dépôt: 14712017.4
(22) Date de dépôt: 03.03.2014
(51) Int. Cl.: B23P 19/04, B25B 27/00, B25D 17/04, B25D 17/06, B25D 17/12, B25D 17/24, B25D 9/08, B25B 31/00

(54) **DISPOSITIF DE MISE EN PLACE D'UN JOINT D'ÉTANCHÉITÉ ET SON UTILISATION**
DICHTUNGSPOSITIONIERUNGSVORRICHTUNG UND IHRE VERWENDUNG
SEAL PLACEMENT DEVICE AND ITS USE

(43) Date de publication de la demande: 11.01.2017
(73) Titulaire: Noretud Industries, 59750 Feignies (FR)
(72) Inventeur: MENISSEZ, Grégory, F-59530 Villereau (FR); DURIEU, Rémi, F-59600 Elesmes (FR)
(74) Mandataire: Cabinet Plasseraud
(86) Numéro de dépôt international: PCT/FR2014/050456
(87) Numéro de publication internationale: WO 2015/132474

(56) Documents cités:
- EP-A2- 0 656 465
- DE-A1-102007 042 721
- FR-A1- 2 849 617
- GB-A- 2 297 514
- JP-A- 2007 261 356
- US-A- 5 157 807

## Description

### Domaine technique

L'objet de la présente invention concerne le domaine de l'outillage pour la mise en place de joints d'étanchéité. En particulier, l'objet de la présente invention concerne un dispositif de mise en place d'un joint d'étanchéité sur un support comportant un générateur de vibrations selon le préambule de la revendication 1. La présente invention concerne aussi l'utilisation d'un tel dispositif.

La présente invention vise notamment à faciliter le travail des opérateurs lors de la mise en place d'un joint d'étanchéité sur un support tel que par exemple une porte d'un véhicule automobile.

L'objet de la présente invention trouve ainsi de nombreuses applications avantageuses, notamment dans le domaine de l'industrie automobile en permettant la mise en place de joints d'étanchéité sur les portes de véhicules automobiles.

Bien évidemment, d'autres applications avantageuses peuvent également être envisagées dans le cadre de la présente invention.

Par joint d'étanchéité au sens de la présente invention, il faut comprendre dans toute la description qui suit un dispositif assurant l'étanchéité en évitant les fuites de fluide, tel que par exemple un liquide ou un gaz, à un raccord, fixe ou mobile. Généralement, un joint d'étanchéité est composé au moins partiellement dans un matériau du type par exemple caoutchouc, élastomère, ou polymère, apte à résister aux différences de pression et/ou de température du fluide, ainsi qu'à sa composition chimique.

### Art antérieur

La mise en place d'un joint d'étanchéité nécessite que celui-ci soit légèrement compressé sur le support, par exemple à l'aide d'un maillet ; cette déformation élastique du joint assure l'étanchéité du contact.

Sur les chaînes de montage de l'industrie automobile, le travail des opérateurs est par nature répétitif ; dans un contexte industriel, il n'est pas envisageable de mettre en place un joint d'étanchéité sur une porte de véhicule à l'aide d'un simple maillet.

Il existe plusieurs approches dans l'état de la technique pour la mise en place d'un tel joint d'étanchéité sur une porte de véhicule automobile.

On connaît notamment un outil vibrant pneumatique permettant une mise en mouvement d'une lime dont la course est d'environ 9 millimètres et qui présente une fréquence d'environ 40 Hertz.

Ce type d'outil n'est pas ergonomique et n'est pas suffisamment performant pour être utilisé sur les chaînes de montage de l'industrie automobile.

On connaît également le document FR 2 849 617 qui propose un dispositif de mise en place d'un joint d'étanchéité sur un support.

Un tel dispositif selon le document FR 2 849 617 comporte un générateur de vibrations comprenant (voir figure 1 du document FR 2 849 617) :
- un corps principal,
- une portion distale, mobile par rapport au corps principal, sur laquelle est fixé un sabot présentant une surface de contact destinée à entrer en contact avec le joint d'étanchéité, et
- des moyens d'entraînement pneumatiques configurés pour entraîner la portion distale selon un mouvement translatif de va-et-vient par rapport au corps principal pour la mise en place du joint d'étanchéité sur le support, lorsque la surface du sabot entre en contact avec le joint d'étanchéité posé sur le support.

Ce dispositif consiste ainsi en un outil pneumatique vibrant pour une mise en mouvement d'un sabot dont la course est comprise entre 0.5 à 6 millimètres, et dont la fréquence est comprise entre de l'ordre de 60 à 150 Hertz.

Cet outil ne répond plus complètement aux nouvelles normes et réglementations relatives aux nuisances sonores et aux nuisances liées aux vibrations, pour l'industrie automobile.

Ces normes et réglementations visent principalement à protéger les opérateurs.

En effet, avec un outil tel que celui divulgué dans le document FR 2 849 617, le mouvement de la portion distale par rapport au corps principal engendre du bruit et des vibrations parasites.

De plus, la préhension de cet outil se fait directement par le corps principal, ce qui rend peu maniable l'outil.

Ainsi, l'opérateur qui tient cet outil dans les mains ressent de nombreuses vibrations ; et les bruits qu'il perçoit sont parfois difficilement supportables, notamment après une journée de travail.

La Demanderesse soumet qu'il n'existe pas à ce jour de solution efficace proposant un outil ergonomique, maniable et pratique à utiliser permettant la mise en place d'un joint d'étanchéité, tout en réduisant les vibrations et le bruit.

### Objet et Résumé de la présente invention

La présente invention vise à améliorer la situation décrite ci-dessus.

Plus particulièrement, la présente invention a pour but notamment de filtrer les vibrations parasites qui sont générées par un outil tel que celui décrit dans le document FR 2 849 617.

La présente invention a également pour but de diminuer le niveau sonore d'un tel outil, ainsi que d'en faciliter son utilisation.

A cet effet, la présente invention concerne un dispositif de mise en place d'un joint d'étanchéité sur un support. On comprend ici que le joint d'étanchéité est simplement posé sur le support, et que pour sa mise en place il faut compresser (ou appuyer) ce joint contre le support.

Selon la présente invention, le dispositif comporte un générateur de vibrations qui comprend :
- un corps principal (de préférence dans un matériau rigide tel que du métal),
- une portion distale, mobile par rapport au corps principal, sur laquelle est fixé un sabot présentant une surface de contact destinée à entrer en contact avec le joint d'étanchéité, et
- des moyens d'entraînement configurés pour entraîner la portion distale selon un mouvement translatif de va-et-vient par rapport au corps principal pour la mise en place du joint d'étanchéité sur le support, lorsque la surface du sabot entre en contact avec le joint d'étanchéité posé sur le support,
- une poignée de préhension reliée au corps principal.

La Demanderesse soumet qu'un tel dispositif est déjà connu du document JP 2007 261356.

Selon le fonctionnement décrit précédemment, l'opérateur dirige cet outil de sorte que la surface de contact du sabot vient appuyer sur le joint d'étanchéité et compresse ledit joint contre le support.

Toutefois, le mouvement translatif de va-et-vient génère de nombreuses vibrations.

Pour résoudre ce problème, il est prévu selon la présente invention :
- des éléments de liaison élastiques entre le corps principal et la poignée de préhension configurés pour limiter la propagation, dans la poignée de préhension, des vibrations générées par le mouvement translatif de va-et-vient, comprenant deux plaques de forme sensiblement annulaire encerclant chacune une portion du corps principal, et
- un cordon élastique dont chaque extrémité est fixée solidairement à la poignée de préhension par des moyens de fixation, et dont la partie médiane est fixée sur l'arrière du corps principal à l'opposé de la portion distale de sorte à contraindre le corps principal dans la direction de la portion distale.

Ainsi, grâce à cet agencement de moyens techniques, caractéristique de la présente invention, il est possible de réduire les vibrations générées par le mouvement translatif de va-et-vient de la portion distale par rapport au corps principal.

Plus particulièrement, en dissociant fonctionnellement le générateur de vibrations de la poignée de préhension, et en reliant ces deux éléments par des moyens élastiques adaptés, les vibrations générées par le mouvement translatif de va-et-vient de la portion distale par rapport au corps principal sont réduites.

La Demanderesse a observé lors de tests que la présence de ces éléments de liaison élastiques entre le corps principal et la poignée de préhension permet de filtrer les basses fréquences.

Cette filtration des basses fréquences est rendue possible par la présence des éléments de liaison élastiques qui se déforment et amortissent les vibrations.

L'opérateur dispose ainsi d'un outil pratique et ergonomique qu'il saisit dans la main par la poignée de préhension.

En actionnant l'outil pour la mise en place d'un joint d'étanchéité contre un support tel que par exemple une porte de véhicule, il ne ressent plus les vibrations « basses fréquences » générées par le mouvement translatif de va-et-vient.

De plus, un tel cordon élastique ainsi positionné entre le corps principal et la poignée de préhension permet, comme l'ont révélé les tests réalisés par la Demanderesse, de filtrer les hautes fréquences.

Avantageusement, les éléments de liaison élastiques sont composés au moins partiellement d'un matériau du type polyuréthane. L'utilisation du polyuréthane permet de réduire de façon significative la propagation des vibrations dans le dispositif.

Avantageusement, le polyuréthane présente une dureté moyenne comprise entre de l'ordre de 70 à 90 Shore A, de préférence sensiblement égale à 80 Shore A. Après plusieurs tests, les propriétés physiques ci-dessus ont montrées des résultats positifs en termes de réduction des vibrations dans le dispositif.

De préférence, chaque plaque comporte une partie fonctionnelle, appelée partie filtrante, qui présente une section transversale ayant une surface comprise entre de l'ordre de 110 et 140 mm². C'est notamment cette partie filtrante qui se déforme et permet de limiter la propagation des vibrations dans la poignée de préhension.

Avantageusement, chacun des moyens de fixation est pourvu d'une vis de réglage pour régler la tension du cordon élastique. Ainsi, en dévissant cette vis, on peut régler la tension du cordon.

De préférence, le cordon élastique est constitué au moins partiellement dans un matériau du type élastomère.

Dans une variante, le cordon élastique est formé par une pluralité de filaments élastiques présentant chacun un diamètre compris entre de l'ordre de 0,6 et 1 millimètre, de préférence sensiblement égal à 0,8 millimètre.

Optionnellement, la pluralité de filaments peut être entourée dans une gaine protectrice, de préférence tressée.

Avantageusement, le sabot est amovible. Il est ainsi possible de changer de sabot en fonction de l'utilisation qu'on souhaite faire du dispositif, et notamment en fonction de la taille du joint (sa largeur) qu'on souhaite réaliser. Dès lors, on peut choisir la taille de la surface de contact souhaitée.

Dans un mode de réalisation avantageux, le corps principal comporte en son intérieur un alésage dans lequel un cylindre mobile, solidaire de la portion distale, est apte à coulisser selon un mouvement translatif de va-et-vient, ledit corps principal présentant une ouverture débouchant sur l'alésage.

Dans ce mode, les moyens d'entraînement sont configurés pour entraîner le cylindre selon un mouvement translatif de va-et-vient à l'intérieur du corps principal.

De préférence, dans ce mode, le cylindre est creux, et les moyens d'entraînement comprennent :
- un piston mobile logé à l'intérieur du cylindre, et
- un tube d'alimentation configuré pour faire passer un flux d'air à travers une pluralité de perforations ménagées sur le cylindre et le piston de manière à entraîner le piston selon un mouvement translatif de va-et-vient dans le cylindre.

Avantageusement, une portion du tube d'alimentation passe à l'intérieur de la poignée de préhension, ce qui facilite les manipulations du dispositif par un opérateur.

De préférence, le tube d'alimentation est configuré pour l'acheminement d'un flux d'air comprimé.

Avantageusement, le corps principal est usiné de manière à présenter au moins un orifice d'échappement autorisant l'échappement de l'air pour réguler la pression à l'intérieur du corps principal.

De préférence, le dispositif comporte un isolant phonique recouvrant au moins partiellement ledit au moins un orifice d'échappement.

Dans un mode de réalisation, l'isolant phonique est constitué au moins partiellement d'une mousse en polyuréthane. De préférence, cette mousse en polyuréthane présente :
- une densité comprise entre de l'ordre de 30 à 50 kg/m², de préférence sensiblement égale à 40 kg/m², et/ou
- une épaisseur sensiblement égale à 30 millimètres.

Avantageusement, le corps principal est pourvu de moyens de guidage formant une glissière pour autoriser le déplacement relatif du cylindre à l'intérieur de l'alésage.

De préférence, ces moyens de guidage sont composés au moins partiellement dans un matériau du type polyéthylène-téréphtalate, de préférence enrobé d'un lubrifiant solide.

Corrélativement, la présente invention concerne également l'utilisation d'un dispositif tel que décrit ci-dessus pour la mise en place d'un joint d'étanchéité sur une porte d'un véhicule automobile.

Ainsi, par ses différents aspects structurels et fonctionnels, la présente invention propose un outil facile d'utilisation permettant la mise en place d'un joint d'étanchéité sans ressentir les différentes nuisances rencontrées jusqu'à présent avec les outils de l'état de la technique.

### Brève description des figures annexées

D'autres caractéristiques et avantages de la présente invention ressortiront de la description ci-dessous, en référence aux figures 1 à 4 annexées qui en illustrent un exemple de réalisation dépourvu de tout caractère limitatif et sur lesquelles :
- la figure 1 représente de façon schématique une vue latérale d'un dispositif conforme à un exemple de réalisation avantageux de la présente invention ;
- la figure 2 représente de façon schématique une vue latérale en coupe d'un dispositif conforme à la figure 1 ; et
- la figure 3 représente de façon schématique une vue arrière en perspective d'un dispositif conforme à un exemple de réalisation avantageux de la présente invention
- la figure 4 représente de façon schématique une vue de face d'un élément de liaison élastique destiné à être positionné entre le corps principal et la poignée de préhension d'un dispositif conforme à un exemple de réalisation avantageux de la présente invention.

### Description détaillée d'un exemple de réalisation avantageux

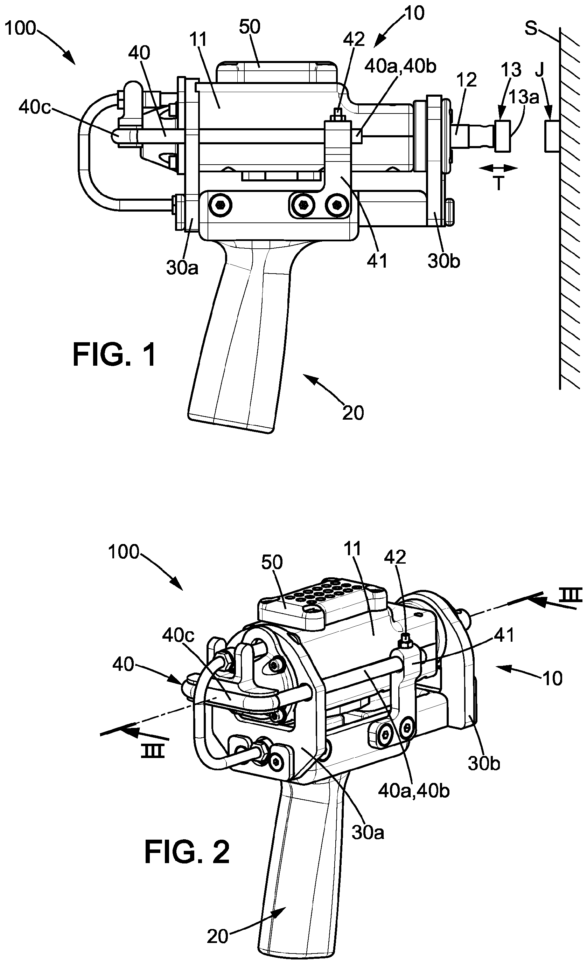

Un dispositif pour la mise en place d'un joint d'étanchéité sur un support va maintenant être décrit dans ce qui suit en faisant référence conjointement aux figures 1 à 4.

La description qui suit concerne principalement un exemple de réalisation se rapportant au domaine de l'industrie automobile, et plus particulièrement au domaine des chaînes de montage de l'industrie automobile sur lesquelles des opérateurs sont chargés de mettre en place un joint d'étanchéité sur des portes de véhicule.

Bien évidemment, cet exemple d'application est un exemple parmi d'autres ; l'homme du métier comprendra ici que le dispositif proposé dans le cadre de la présente invention peut trouver d'autres applications avantageuses dans d'autres domaines nécessitant la mise en place un joint d'étanchéité.

Dans l'exemple décrit ici, le joint J est déjà « posé » sur un support S tel qu'une porte d'un véhicule automobile. L'opérateur doit « mettre en place » le joint d'étanchéité J en appuyant ce joint J contre le support S. Une telle mise en place est possible en exerçant une pression sur le joint J contre le support S ; en d'autres termes, il suffit pour cette mise en place de comprimer le joint J contre le support S.

Une telle mise en place nécessite l'utilisation d'un outil du type celui proposé dans le document FR 2 849 617.

Un tel outil, par son mécanisme pneumatique, génère de nombreuses vibrations qui sont nocives et contreviennent aux différentes normes et réglementations en vigueur dans l'industrie automobile.

Par ailleurs, un tel outil est bruyant.

Un des objectifs de la présente invention est donc ici d'apporter une solution à ces problèmes.

Plus particulièrement, la présente invention vise à fournir un dispositif pour la mise en place d'un joint d'étanchéité, qui est maniable et qui est confortable d'utilisation.

Il est notamment recherché un dispositif qui limite, voire supprime, les vibrations et le bruit ressentis par l'opérateur lorsque celui-ci utilise un outil tel que celui proposé dans le document FR 2 849 617.

Limiter ces vibrations et ce bruit est rendu possible par l'agencement des différents moyens qui vont être décrits dans ce qui suit.

Dans l'exemple décrit ici, et comme illustré en figure 1, l'opérateur dispose d'un outil consistant en un dispositif 100 de mise en place d'un joint d'étanchéité J comportant un générateur de vibrations 10, ou moteur.

Dans cet exemple, le générateur de vibrations 10 comprend un corps principal 11 ; comme illustré en figure 2, le corps principal 11 présente une ouverture (de préférence oblongue) débouchant sur un alésage 15 à l'intérieur du corps principal 11.

Le générateur de vibrations 10 comprend également une portion distale 12 formée par un axe traversant ladite ouverture, et dont l'extrémité est pourvu d'un sabot 13 présentant une surface de contact 13a destinée à entrer en contact avec le joint d'étanchéité J.

Dans cet exemple, l'axe est apte à réaliser un mouvement translatif T de va-et-vient par rapport au corps principal 11 en coulissant à travers ladite ouverture. Ainsi, grâce à ce mouvement T de va-et-vient, l'opérateur n'a plus qu'à diriger la surface de contact 13a du sabot 13 en direction du joint d'étanchéité J. Une fois suffisamment près, la surface 13a par le mouvement de va-et-vient entre en contact avec le joint J et compresse ledit joint J contre le support J pour sa mise en place.

Ce déplacement relatif de l'axe par rapport au corps principal 11 est possible grâce à des moyens d'entraînement 14 spécifiques.

Dans cet exemple, ces moyens d'entraînement 14 sont ceux divulgués dans le document FR 2 849 617. Ici, ces moyens sont donc des moyens pneumatiques ; l'homme du métier comprendra que d'autres moyens, par exemple électriques ou hydrauliques, peuvent également être déployés pour entraîner la mise en mouvement de l'axe par rapport au corps principal 11.

Le mécanisme d'entraînement peut être brièvement décrit dans ce qui suit :
Comme illustré en figure 2, dans l'alésage 15 coulisse selon un mouvement translatif de va-et-vient un cylindre 16 creux, solidaire de la portion distale 12. On comprend ici que la mise en mouvement du cylindre permet à l'axe de coulisser à travers l'ouverture selon un mouvement linéaire de va-et-vient.

Le cylindre 16 est guidé par des moyens de guidage à l'intérieur de l'alésage 15, ces moyens de guidage formant une glissière étant composés notamment de bagues de guidage situées aux extrémités du cylindre et permettant de guider en translation le cylindre dans l'alésage.

Ce mouvement du cylindre 16 dans l'alésage 15 est possible par la présence d'un piston 17 mobile logé à l'intérieur du cylindre 16, et d'un tube d'alimentation 18.

Dans l'exemple décrit ici, le tube 18 permet le passage d'un flux d'air comprimé à l'intérieur du cylindre 16.

Cet air comprimé est ensuite guidé à travers une pluralité de perforations ménagées sur le cylindre 16 et le piston 17.

Ces perforations sont spécifiques et sont configurées de sorte, que lorsque le flux d'air circule à travers les perforations, le piston 17 se déplace selon un mouvement translatif de va-et-vient dans le cylindre 16.

Dans cet exemple, c'est donc le mouvement du piston 17 à l'intérieur du cylindre 16 qui entraîne le mouvement du cylindre dans l'alésage 15.

Dans cet exemple, il est en outre prévu une pluralité d'orifices d'échappement 19 qui sont ménagés dans le corps 11 pour autoriser l'échappement de l'air comprimé afin de réguler la pression à l'intérieur dudit corps principal 11.

Le générateur de vibrations est bruyant. Pour limiter le bruit généré, on prévoit un isolant phonique 50, en polyuréthane, recouvrant ces orifices d'échappement 19.

Les moyens d'entraînement 14 décrits ci-dessus génèrent de nombreuses vibrations.

Pour rendre plus maniable le dispositif 100 et dissocier les fonctions permettant la génération de vibrations et celles de préhension, il est prévu dans l'exemple décrit ici la présence d'une poignée de préhension 20, indépendante du générateur de vibrations 10.

Dans l'exemple décrit ici, et comme illustré en figure 2, une portion du tube d'alimentation 18 passe à l'intérieur de cette poignée de préhension 20. Ainsi, lorsque l'opérateur utilise le dispositif 10 en le saisissant par la poignée 20, il n'est pas gêné par le tube d'alimentation 18.

Dans l'exemple décrit ici, le corps principal 11 est monté sur la poignée de préhension 20 par des moyens de guidage 60 formant une glissière ; cette glissière permet d'autoriser le déplacement relatif du corps principal 11 par rapport à la poignée de préhension 20, notamment lorsqu'on appuie le surface de contact 13a contre le joint J.

Dans cet exemple, on prévoit également la présence d'éléments de liaison élastiques 30a et 30b entre le corps principal 11 et la poignée de préhension 20.

Ces éléments de liaison 30a et 30b sont configurés pour limiter la propagation, dans la poignée de préhension 20, des vibrations générées par le mouvement translatif de va-et-vient.

Dans cet exemple, les éléments de liaison 30a et 30b sont en polyuréthane et présentent une dureté de 80 Shore A.

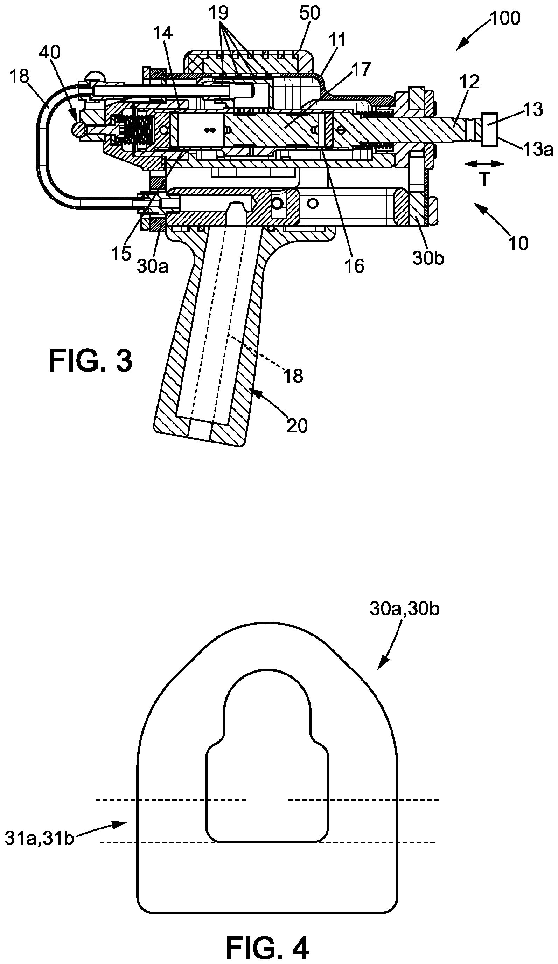

Comme illustré en figure 3, ces éléments de liaison 30a et 30b sont fixés sur la portion supérieure de la poignée de préhension, au niveau de ses extrémités. Dans cet exemple, ces éléments 30a et 30b consistent en deux plaques de forme annulaire encerclant chacune une portion du corps principale 11.

Comme illustré en figure 4, chacune de ces plaques 30a et 30b présente, au niveau de la partie filtrante, une section transversale ayant une surface comprise entre de l'ordre de 110 et 140 mm². C'est cette partie filtrante qui se déforme et assure la filtration des vibrations.

Dans l'exemple décrit ici, le dispositif comporte également un cordon élastique 40 en élastomère dont chaque extrémité 40a et 40b est fixée solidairement à la poignée de préhension 20 par des moyens de fixation 41. Dans cet exemple, chaque moyen 41 comporte une vis de réglage 42 qui permet de régler la tension du cordon élastique 40.

Comme illustré en figure 3, la partie médiane 40c du cordon 40 est fixée sur l'arrière du corps principal 11 à l'opposé de la portion distale 12.

La présence d'un tel cordon 40 permet de contraindre le corps principal 11 dans la direction de la portion distale 12.

L'opérateur qui tient dans sa main par l'intermédiaire d'une poignée 20 un dispositif 100 comprenant un cordon élastique 40 et des éléments de liaison 30a et 30b ne ressent quasiment aucune vibration. En effet, la présence conjointe de ces éléments 40, 30a et 30b permet de filtrer à la fois les hautes et les basses fréquences qui sont générées par le moteur, générateur de vibrations.

Grâce aux différentes caractéristiques décrites ci-dessus, la présente invention permet de remédier aux différents inconvénients ci-dessus de l'état de la technique.

La présente invention propose ainsi un outil pratique, maniable et peu encombrant, qui améliore le confort de l'utilisateur par rapport à un outil tel que celui proposé dans le document FR 2 849 617 ;

L'outil proposé ici dans le cadre de la présente invention trouve une application avantageuse pour la mise en place de joints d'étanchéité sur les portes de voiture dans les chaînes de montage de l'industrie automobile.

Il devra être observé que cette description détaillée porte sur un exemple de réalisation particulier de la présente invention, mais qu'en aucun cas cette description ne revêt un quelconque caractère limitatif à l'objet de l'invention ; bien au contraire, elle a pour objectif d'ôter toute éventuelle imprécision ou toute mauvaise interprétation des revendications qui suivent.

## Revendications

1. Dispositif (100) de mise en place d'un joint d'étanchéité (J) sur un support (S) comportant un générateur de vibrations (10) comprenant :
- un corps principal (11),
- une portion distale (12), mobile par rapport audit corps principal (11), sur laquelle est fixé un sabot (13) présentant une surface de contact (13a) destinée à entrer en contact avec le joint d'étanchéité (J), et
- des moyens d'entraînement (14) configurés pour entraîner ladite portion distale (12) selon un mouvement translatif (T) de va-et-vient par rapport au corps principal (11) pour la mise en place du joint d'étanchéité (J) sur le support (S), lorsque la surface (13a) dudit sabot (13) entre en contact avec ledit joint d'étanchéité (J) posé sur le support (S),
- une poignée de préhension (20) reliée au corps principal (11)
**caractérisé en ce qu'**il comporte
- des éléments de liaison élastiques (30a, 30b) entre le corps principal (11) et la poignée de préhension (20) configurés pour limiter la propagation, dans la poignée de préhension (20), des vibrations générées par le mouvement translatif (T) de va-et-vient, comprenant deux plaques (30a, 30b) de forme sensiblement annulaire encerclant chacune une portion du corps principal (11),
- un cordon élastique (40) dont chaque extrémité (40a, 40b) est fixée solidairement à la poignée de préhension (20) par des moyens de fixation (41), et dont la partie médiane (40c) est fixée sur l'arrière du corps principal (11) à l'opposé de la portion distale (12) de sorte à contraindre le corps principal (11) dans la direction de ladite portion distale (12).

2. Dispositif (100) selon la revendication 1, dans lequel les éléments de liaison élastiques (30a, 30b) sont composés au moins partiellement dans un matériau du type polyuréthane.

3. Dispositif (100) selon la revendication 2, dans lequel le polyuréthane présente une dureté moyenne comprise entre de l'ordre de 70 à 90 Shore A, de préférence sensiblement égale à 80 Shore A.

4. Dispositif (100) selon l'une des revendications 1 à 3, dans lequel chaque plaque (30a, 30b) comporte une partie filtrante présentant une section transversale ayant une surface comprise entre de l'ordre de 110 et 140 mm².

5. Dispositif (100) selon la revendication 4, dans lequel chacun des moyens de fixation (41) est pourvu d'une vis de réglage (42) pour régler la tension du cordon élastique (40).

6. Dispositif (100) selon la revendication 4 ou 5, dans lequel le cordon élastique (40) est constitué au moins partiellement dans un matériau du type élastomère.

7. Dispositif (100) selon l'une quelconque des revendications 4 à 6, dans lequel le cordon élastique (40) est formé par une pluralité de filaments élastiques présentant chacun un diamètre compris entre de l'ordre de 0,6 et 1 millimètre, de préférence sensiblement égal à 0,8 millimètre.

8. Dispositif (100) selon la revendication 7, dans lequel ladite pluralité de filaments est entourée dans une gaine protectrice, de préférence tressée.

9. Dispositif (100) selon l'une quelconque des revendications précédentes, dans lequel le sabot (13) est amovible.

10. Dispositif (100) selon l'une quelconque des revendications précédentes, dans lequel le corps principal (11) comporte en son intérieur un alésage (15) dans lequel un cylindre (16) mobile, solidaire de la portion distale (12), est apte à coulisser selon un mouvement translatif de va-et-vient, ledit corps principal (11) présentant une ouverture débouchant sur ledit alésage (15).

11. Dispositif (100) selon la revendication 10, dans lequel le cylindre (16) est creux, et dans lequel les moyens d'entraînement (14) comprennent :
- un piston (17) mobile logé à l'intérieur dudit cylindre (16), et
- un tube d'alimentation (18) configuré pour faire passer un flux d'air à travers une pluralité de perforations ménagées sur le cylindre (16) et le piston (17) de manière à entraîner le piston (17) selon un mouvement translatif de va-et-vient dans le cylindre (16).

12. Dispositif (100) selon la revendication 11, dans lequel une portion du tube d'alimentation (18) passe à l'intérieur de la poignée de préhension (20).

13. Dispositif (100) selon la revendication 11 ou 12, dans lequel le tube d'alimentation (18) est configuré pour l'acheminement d'un flux d'air comprimé.

14. Dispositif (100) selon l'une quelconque des revendications 11 à 13, dans lequel le corps principal (11) est usiné de manière à présenter au moins un orifice d'échappement (19) autorisant l'échappement de l'air pour réguler la pression à l'intérieur dudit corps principal (11).

15. Dispositif (100) selon la revendication 14, comportant un isolant phonique (50) recouvrant au moins partiellement l'orifice d'échappement (19).

16. Dispositif (100) selon la revendication 15, dans lequel l'isolant phonique (50) est constitué au moins partiellement d'une mousse en polyuréthane.

17. Dispositif (100) selon la revendication 16, dans lequel la mousse en polyuréthane présente :
- une densité comprise entre de l'ordre de 30 à 50 kg/m², de préférence sensiblement égale à 40 kg/m², et/ou
- une épaisseur sensiblement égale à 30 millimètres.

18. Utilisation d'un dispositif (100) selon l'une quelconque des revendications 1 à 17 pour la mise en place d'un joint d'étanchéité (J) sur une porte d'un véhicule automobile.

## Patentansprüche

1. Vorrichtung (100) zur Anordnung einer Dichtung (J) auf einem Träger (S), umfassend einen Schwingungserzeuger (10), umfassend:
- einen Hauptkörper (11),
- einen distalen Abschnitt (12), der in Bezug zum Hauptkörper (11) beweglich ist, auf dem ein Kontaktkörper (13) befestigt ist, der eine Kontaktfläche (13a) aufweist, die dazu bestimmt ist, mit der Dichtung (J) in Kontakt zu kommen, und
- Antriebsmittel (14), die eingerichtet sind, um den distalen Abschnitt (12) in einer translatorischen Hin- und Herbewegung (T) in Bezug zum Hauptkörper (11) für die Anbringung der Dichtung (J) auf dem Träger (S) anzutreiben, wenn die Fläche (13a) des Kontaktkörpers (13) mit der auf dem Träger (S) angeordneten Dichtung (J) in Kontakt kommt,
- einen Griff (20), der mit dem Hauptkörper (11) verbunden ist,
**dadurch gekennzeichnet, dass** sie umfasst:
- elastische Verbindungselemente (30a, 30b) zwischen dem Hauptkörper (11) und dem Griff (20), die eingerichtet sind, um in dem Griff (20) die Ausbreitung der Schwingungen, die durch die translatorische Hin- und Herbewegung (T) erzeugt werden, zu begrenzen, umfassend zwei Platten (30a, 30b) von im Wesentlichen ringförmiger Form, die jeweils einen Abschnitt des Hauptkörpers (11) einschließen,
- ein elastisches Band (40), dessen Enden (40a, 40b) jeweils fest am Griff (20) durch Befestigungsmittel (41) befestigt ist, und dessen Mittelteil (40c) hinten am Hauptkörper (11) gegenüber dem distalen Abschnitt (12) befestigt ist, so dass der Hauptkörper (11) in die Richtung des distalen Abschnitts (12) gedrückt wird.

2. Vorrichtung (100) nach Anspruch 1, bei der die elastischen Verbindungselemente (30a, 30b) zumindest teilweise aus einem Material vom Typ Polyurethan hergestellt sind.

3. Vorrichtung (100) nach Anspruch 2, bei der das Polyurethan eine durchschnittliche Härte zwischen ungefähr 70 und 90 Shore A, vorzugsweise im Wesentlichen gleich 80 Shore A aufweist.

4. Vorrichtung (100) nach einem der Ansprüche 1 bis 3, bei der jede Platte (30a, 30b) einen Filterteil umfasst, der einen Querschnitt mit einer Oberfläche zwischen ungefähr 110 und 140 mm² aufweist.

5. Vorrichtung (100) nach Anspruch 4, bei der jedes der Befestigungsmittel (41) mit einer Einstellschraube (42) versehen ist, um die Spannung des elastischen Bandes (40) einzustellen.

6. Vorrichtung (100) nach Anspruch 4 oder 5, bei der das elastische Band (40) zumindest teilweise von einem Material vom Typ Elastomer gebildet ist.

7. Vorrichtung (100) nach einem der Ansprüche 4 bis 6, bei der das elastische Band (40) von einer Vielzahl von elastischen Filamenten gebildet ist, die jeweils einen Durchmesser zwischen ungefähr 0,6 und 1 Millimeter, vorzugsweise im Wesentlichen gleich 0,8 Millimeter aufweisen.

8. Vorrichtung (100) nach Anspruch 7, bei der die Vielzahl von Filamenten von einem Schutzmantel, vorzugsweise geflochten, umgeben ist.

9. Vorrichtung (100) nach einem der vorhergehenden Ansprüche, bei der der Kontaktkörper (13) abnehmbar ist.

10. Vorrichtung (100) nach einem der vorhergehenden Ansprüche, bei der der Hauptkörper (11) in seinem Inneren eine Bohrung (15) umfasst, in der ein beweglicher Zylinder (16), der mit dem distalen Abschnitt (12) verbunden ist, geeignet ist, in einer translatorischen Hin- und Herbewegung zu gleiten, wobei der Hauptkörper (11) eine Öffnung aufweist, die in die Bohrung (15) einmündet.

11. Vorrichtung (100) nach Anspruch 10, bei der der Zylinder (16) hohl ist, und bei der die Antriebsmittel (14) umfassen:
- einen beweglichen Kolben (17), der innerhalb des Zylinders (16) angeordnet ist, und
- ein Zuführrohr (18), das eingerichtet ist, um einen Luftstrom durch eine Vielzahl von Perforationen zu leiten, die auf dem Zylinder (16) und dem Kolben (17) vorgesehen sind, um den Kolben (17) in einer translatorischen Hin- und Herbewegung in dem Zylinder (16) anzutreiben.

12. Vorrichtung (100) nach Anspruch 11, bei der ein Abschnitt des Zuführrohrs (18) innerhalb des Griffes (20) verläuft.

13. Vorrichtung (100) nach Anspruch 11 oder 12, bei der das Zuführrohr (18) für die Beförderung eines Druckluftstroms eingerichtet ist.

14. Vorrichtung (100) nach einem der Ansprüche 11 bis 13, bei der der Hauptkörper (11) derart bearbeitet ist, dass er mindestens eine Ablassöffnung (19) aufweist, die das Ablassen der Luft gestattet, um den Druck innerhalb des Hauptkörpers (11) zu regeln.

15. Vorrichtung (100) nach Anspruch 14, umfassend eine Schalldämmung (50), die zumindest teilweise die Ablassöffnung (19) bedeckt.

16. Vorrichtung (100) nach Anspruch 15, bei der die Schalldämmung (50) zumindest teilweise von Polyurethanschaum gebildet ist.

17. Vorrichtung (100) nach Anspruch 16, bei der der Polyurethanschaum aufweist:
- eine Dichte zwischen ungefähr 30 und 50 kg/m², vorzugsweise im Wesentlichen gleich 40 kg/m², und/oder
- eine Dicke im Wesentlichen gleich 30 Millimeter.

18. Verwendung einer Vorrichtung (100) nach einem der Ansprüche 1 bis 17 für die Anbringung einer Dichtung (J) an einer Kraftfahrzeugtür.

## Claims

1. Device (100) for placing a seal (J) on a mounting (S) comprising a vibration generator (10) comprising:
- a main body (11),
- a distal portion (12), capable of moving relative to said main body (11), onto which a cap (13) having a contact surface (13a) for coming into contact with the seal (J) is fixed, and
- drive means (14) configured to drive said distal portion (12) in a back-and-forth translational movement (T) relative to the main body (11), in order to place the seal (J) on the mounting (S), when the surface (13a) of said cap (13) comes into contact with said seal (J) that is placed on the mounting (S),
- a grasping handle (20) connected to the main body (11)
**characterised in that** it comprises
- resilient connection elements (30a, 30b) between the main body (11) and the grasping handle (20) configured such that they limit the propagation, in the grasping handle (20), of the vibrations generated by the back-and-forth translational movement (T), which comprise two plates (30a, 30b) of substantially annular shape, each encircling a portion of the main body (11),
- a resilient cord (40), each end (40a, 40b) whereof is integrally fixed to the grasping handle (20) by fastening means (41), and the median part (40c) whereof is fixed onto the rear of the main body (11) opposite the distal portion (12) in such a way as to stress the main body (11) in the direction of said distal portion (12).

2. Device (100) according to claim 1, wherein the resilient connection elements (30a, 30b) are made at least partially of a material of the polyurethane type.

3. Device (100) according to claim 2, wherein the polyurethane has an average hardness that lies in the range of about 70 to 90 Shore A, and is preferably substantially equal to 80 Shore A.

4. Device (100) according to one of claims 1 to 3, wherein each plate (30a, 30b) comprises a filtering part, the cross-section whereof has a surface area that lies in the range of about 110 to 140 mm².

5. Device (100) according to claim 4, wherein each of the fastening means (41) is provided with an adjusting screw (42) in order to adjust the tension in the resilient cord (40).

6. Device (100) according to either claim 4 or claim 5, wherein the resilient cord (40) is made at least partially of a material of the elastomer type.

7. Device (100) according to any of claims 4 to 6, wherein the resilient cord (40) is formed by a plurality of resilient filaments, each of which has a diameter that lies in the range of about 0.6 to 1 millimetre, and is preferably substantially equal to 0.8 millimetres.

8. Device (100) according to claim 7, wherein said plurality of filaments is surrounded by a protective sheath, more preferably by a braided sheath.

9. Device (100) according to any of the preceding claims, wherein the cap (13) is removable.

10. Device (100) according to any of the preceding claims, wherein the main body (11) comprises a bore (15) therein, in which bore a movable cylinder (16), integral with the distal portion (12), is able to slide in a back-and-forth translational movement, said main body (11) having an opening that opens out onto said bore (15).

11. Device (100) according to claim 10, wherein the cylinder (16) is hollow, and wherein the drive means (14) comprise:
- a movable piston (17) housed inside said cylinder (16), and
- a feed pipe (18) configured to allow an airflow to pass through a plurality of perforations made on the cylinder (16) and the piston (17) in such a way as to drive the piston (17) in a back-and-forth translational movement inside the cylinder (16).

12. Device (100) according to claim 11, wherein a portion of the feed pipe (18) passes inside the grasping handle (20).

13. Device (100) according to either claim 11 or claim 12, wherein the feed pipe (18) is configured to convey a flow of compressed air.

14. Device (100) according to any of claims 11 to 13, wherein the main body (11) is machined in such a way as to have at least one exhaust outlet (19) that allows air to escape in order to adjust the pressure inside said main body (11).

15. Device (100) according to claim 14, comprising an acoustic insulator (50) at least partially covering the exhaust outlet (19).

16. Device (100) according to claim 15, wherein the acoustic insulator (50) is made at least partially of a polyurethane foam.

17. Device (100) according to claim 16, wherein the polyurethane foam has:
- a density that lies in the range of about 30 to 50 kg/m², and is preferably substantially equal to 40 kg/m², and/or
- a thickness that is substantially equal to 30 millimetres.

18. Use of a device (100) according to any of claims 1 to 17 for placing a seal (J) on a door of a motor vehicle.
